# EUROPEAN PATENT SPECIFICATION

(11) **EP 2 294 119 B1**
(45) Date of publication and mention of the grant of the patent: **01.08.2018**
(21) Application number: 09789826.6
(22) Date of filing: 16.06.2009
(51) Int. Cl.: C08K 3/00, C08L 63/00

(54) **REINFORCED CURABLE COMPOSITIONS**
HÄRTBARE FASERVERSTÄRKTE ZUSAMMENSETZUNGEN
COMPOSITIONS DURCISSABLES RENFORCÉES

(30) Priority: 16.06.2008 US 61795 P
(43) Date of publication of application: 16.03.2011
(73) Proprietor: 3M Innovative Properties Company, St. Paul, MN 55133-3427 (US)
(72) Inventor: THOMPSON, Wendy, L., Saint Paul, MN 55133-3427 (US); SCHULTZ, William, J., Saint Paul, MN 55133-3427 (US); KROPP, Michael, A., Saint Paul, MN 55133-3427 (US); SETH, Jayshree, Saint Paul, MN 55133-3427 (US); GOETZ, Douglas, P., Saint Paul, MN 55133-3427 (US); HINE, Andrew, M., Saint Paul, MN 55133-3427 (US)
(74) Representative: Vossius & Partner Patentanwälte Rechtsanwälte mbB
(86) International application number: PCT/US2009/047465
(87) International publication number: WO 2010/005710

(56) References cited:
- EP-A- 1 176 171
- US-A- 4 684 678
- GAM K T ET AL: "Fracture behavior of core-shell rubber-modified clay-epoxy" POLYMER ENGINEERING & SCIENCE, WILEY, HOBOKEN, NJ, US, vol. 43, no. 10, 1 October 2003 (2003-10-01), pages 1635-1645, XP003012282 ISSN: 0032-3888
- BALAKRISHNAN ET AL: "The influence of clay and elastomer concentration on the morphology and fracture energy of preformed acrylic rubber dispersed clay filled epoxy nanocomposites" POLYMER, ELSEVIER SCIENCE PUBLISHERS B.V, GB, vol. 46, no. 25, 28 November 2005 (2005-11-28), pages 11255-11262, XP005171319 ISSN: 0032-3861

## Description

### FIELD

The present disclosure relates to toughened curable compositions. Specifically, curable compositions containing both surface-modified inorganic nanoparticles and rubber nano-domains are described.

### SUMMARY

Briefly, in one aspect, the present disclosure provides a curable composition comprising at least one curable resin; surface modified nanoparticles; and rubber nano-domains as defined in claim 1. In some embodiments, the curable resin comprises an epoxy. In some embodiments, the curable resin comprises a free-radically curable resin. In some embodiments, the composition includes a curing agent.

The surface modified nanoparticles comprise an inorganic core and at least one organic modifying agent associated with a surface of the inorganic core, which comprises a silica core. In some embodiments, the surface modified nanoparticles have an average particle size of at least 50 nanometers, for example, at least 100 nanometers, and in some embodiments between 100 and 250 nanometers.

The rubber nano-domains comprise core-shell rubber nanoparticles. In some embodiments, the core-shell rubber nanoparticles comprise a shell having a glass transition temperature of at least 50 °C and a core having a glass transition temperature of no greater than -20 °C. In some embodiments, the shell is selected from the group consisting of an acrylic polymer, an acrylic copolymer, a styrenic polymer, and a styrenic copolymer. In some embodiments, the core is selected from the group consisting of an acrylic rubber and a diene rubber.

In some embodiments, the rubber nano-domains comprise self-assembling, block copolymers, e.g., triblock copolymers.

The rubber nano-domains have an average size of 10 nm nanometers to 500 nanometers as measured by transmission electron microscopy.

In some embodiments, the curable composition comprises 20% to 50% by weight surface modified nanoparticles based on the total weight of the curable resin(s), the surface modified nanoparticles, and the core shell rubber nanoparticles. In some embodiments, the curable composition comprises 0.5% to 10% by weight rubber nano-domains based on the total weight of the curable resin(s), the surface modified nanoparticles, and the rubber nano-domains.

In another aspect, the present disclosure provides toughened resins comprising a cured curable composition according to the present disclosure. In a further aspect, the present disclosure provides articles comprising such toughened resins, including composite articles comprising a fiber reinforced matrix, e.g., a wind turbine blade or a sporting good.

The above summary of the present disclosure is not intended to describe each embodiment of the present invention. The details of one or more embodiments of the invention are also set forth in the description below. Other features, objects, and advantages of the invention will be apparent from the description and from the claims.

### BRIEF DESCRIPTION OF THE DRAWINGS

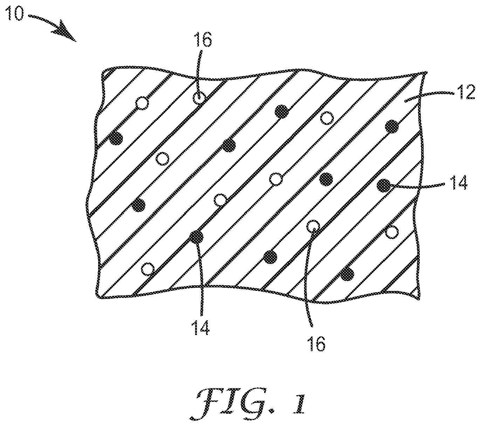

FIG. 1 illustrates a curable resin system according to some embodiments of the present disclosure.

### DETAILED DESCRIPTION

Generally, curable resin systems, e.g., epoxy resin systems, have been used in a wide variety of applications including adhesives, coatings, underfill compositions, and impregnating resins for composites. While the required attributes of the cured resin depend on the application, it is often desirable to improve the mechanical properties of the resin, e.g., the fracture toughness and modulus, while maintaining or enhancing other properties such as glass transition temperature, coefficient of thermal expansion, and optical clarity.

Generally, compositions of the present disclosure comprise a curable resin, surface-modified nanoparticles, and nanoscale rubber domains (i.e., "rubber nano-domains"). The rubber nano-domains comprise core-shell rubber particles. In some embodiments, the rubber nano-domains comprise self-assembled block copolymers.

In some embodiments, the cured compositions exhibit an improved balance of mechanical properties relative to the same curable resin combined with either the surface-modified nanoparticles or the rubber nano-domains alone. In some embodiments, the cured compositions of the present disclosure exhibit a surprising synergistic effect from combining both surface modified nanoparticles and rubber nano-domains.

Generally, any known curable resin may be used including, e.g., thermally curable, radiation curable, moisture curable, and diffusible agent curable resins. Prior to curing, the curable resins may be present as monomers and/or prepolymers (e.g., oligomers). Useful curing mechanisms include cationic cure, anionic cure, addition cure, and free-radical cure. In some embodiments, higher glass transition temperature (Tg) "glassy" resins may be used, e.g., resins having a Tg of greater than 50 °C after curing.

Exemplary curable resins include, e.g., epoxies, and ethylenically-unsaturated crosslinkable resins (e.g., unsaturated polyesters, "vinyl esters", and acrylates (e.g., urethane acrylates)). As used herein, the term "vinyl ester" refers to the reaction product of epoxy resins with ethylenically-unsaturated monocarboxylic acids. Although such reaction products are acrylic or methacrylic esters, the term "vinyl ester" is used consistently in some industries (e.g., the gel coat industry). (See, e.g., Handbook of Thermoset Plastics (Second Edition), William Andrew Publishing, page 122 (1998).) Additional exemplary resins include cyanate esters and bismalimides.

In some embodiments, the unsaturated polyester resin is the condensation product of one or more carboxylic acids or derivatives thereof (e.g., anhydrides and esters) with one or more alcohols (e.g., polyhydric alcohols). In some embodiments, one or more of the carboxylic acids may be an unsaturated carboxylic acid, a saturated carboxylic acid, or an aromatic carboxylic acid. In some embodiments, combinations of saturated, unsaturated and/or aromatic carboxylic acids may be used.

In some embodiments, epoxy resins may be used. Epoxy resins are well-known in the art and comprise compounds or mixtures of compounds which contain one or more epoxy groups. The compounds can be saturated or unsaturated, aliphatic, alicylic, aromatic, or heterocyclic, or can comprise combinations thereof. In some embodiments, compounds which contain more than one epoxy group (i.e., polyepoxides) are preferred.

Polyepoxides which can be used include, e.g., both aliphatic and aromatic polyepoxides, but aromatic polyepoxides may be preferred for high temperature applications. The aromatic polyepoxides are compounds containing at least one aromatic ring structure, e.g. a benzene ring, and more than one epoxy group. Exemplary aromatic polyepoxides include the polyglycidyl ethers of polyhydric phenols (e.g., bisphenol A derivative resins, epoxy cresol-novolac resins, bisphenol F derivative resins, epoxy phenol-novolac resins), glycidyl esters of aromatic carboxylic acids, and glycidyl amines of aromatic amines.

Depending on the selection of the curable resin, in some embodiments, the resin system may also include a reactive diluent. Exemplary reactive diluents include styrene, alpha-methylstyrene, vinyl toluene, divinylbenzene, triallyl cyanurate, methyl methacrylate, diallyl phthalate, ethylene glycol dimethacrylate, hydroxyethyl methacrylate, hydroxyethyl acrylate, and other mono- and multi-functional (meth)acrylates.

Generally, a "surface modified nanoparticle" comprises surface treatment agents attached to the surface of a core. In some embodiments, the surface of the core comprises a metal oxide. Any known metal oxide may be used. Exemplary metal oxides include silica, titania, alumina, zirconia, vanadia, chromia, antimony oxide, tin oxide, zinc oxide, ceria, and mixtures thereof. In some embodiments, the core comprises an oxide of one metal deposited on an oxide of another metal. In some embodiments, the core comprises a metal oxide deposited on a non-metal oxide. As used herein, the term "silica nanoparticle" refers to a nanoparticle having a silica surface. This includes nanoparticles that are substantially, entirely silica, as well nanoparticles comprising other inorganic (e.g., metal oxide) or organic cores having a silica surface.

Generally, a surface treatment agent is an organic species having a first functional group capable of chemically attaching (e.g., covalently or ionically bonding) or physically attaching (e.g., strong physisorptively attaching) to the surface of the core of a nanoparticle, wherein the attached surface treatment agent alters one or more properties of the nanoparticle. In some embodiments, surface treatment agents have no more than three functional groups for attaching to the core. In some embodiments, the surface treatment agents have a low molecular weight, e.g. a weight average molecular weight less than 1000 grams per mole.

In some embodiments, the surface treatment agent further includes one or more additional functional groups providing one or more additional desired properties. For example, in some embodiments, an additional functional group may be selected to provide a desired degree of compatibility between the reactive, surface modified nanoparticles and one or more of the additional constituents of the resin system, e.g., one or more of the crosslinkable resins and/or reactive diluents. In some embodiments, an additional functional group may be selected to modify the rheology of the resin system, e.g., to increase or decrease the viscosity, or to provide non-Newtonian rheological behavior, e.g., thixotropy (shear-thinning).

In some embodiments, the surface-modified nanoparticles are reactive; that is, at least one of the surface treatment agents used to surface modify the nanoparticles of the present disclosure may include a second functional group capable of reacting with one or more of the crosslinkable resin(s) and/or one or more of the reactive diluent(s) of the resin system.

Exemplary surface treatment agents include those derived from monohydric alcohols, polyols, organosilanes, and organotitanates. Additional exemplary surface treatment agents include those derived from phenyltrimethoxy silane, benzooxasilepin dimethyl ester, phenethyltrimethoxy silane, and N-phenylaminopropyl trimethoxysilane. In some embodiments, the surface treatment agents may be derived from mixtures of these and other materials.

Particle size measurements can be based on, e.g., transmission electron microscopy (TEM). The surface-modified nanoparticles have a primary particle size (as measured by TEM) of between 50 nanometers to 500 nanometers, and in some embodiments from 50 nanometers to 250 nanometers, and even in some embodiments from 100 nanometers to 250 nanometers. In some embodiments, the cores have an average diameter of at least 5 nanometers, in some embodiments, at least 10 nanometers, at least 25 nanometers, at least 50 nanometers, and in some embodiments, at least 75 nanometers. In some embodiments the cores have an average diameter of no greater than 500 nanometers, no greater than 250 nanometers, and in some embodiments no greater than 150 nanometers.

In some embodiments, silica nanoparticles can have a particle size of ranging from about 50 to about 500 nm, e.g., 70 to about 250 nm, e.g., 140 to 225 nm. Commercially available silicas include those available from Nalco Chemical Company, Naperville, Illinois (for example, NALCO 1040, 1042, 1050, 1060, 2327 and 2329) and Nissan Chemical America Company, Houston, Texas.

The core is substantially spherical. In some embodiments, the cores are relatively uniform in primary particle size. In some embodiments, the cores have a narrow particle size distribution. In some embodiments, the core is substantially fully condensed. In some embodiments, the core is amorphous. In some embodiments, the core is isotropic. In some embodiments, the core is at least partially crystalline. In some embodiments, the core is substantially crystalline. In some embodiments, the particles are substantially non-agglomerated. In some embodiments, the particles are substantially non-aggregated in contrast to, for example, fumed or pyrogenic silica.

In some embodiments, the curable resin systems of the present disclosure contain at least 10%, in some embodiments, at least 20%, in some embodiments, at least 30%, or even at least 40% by weight of surface-modified nanoparticles based on the total weight of the curable rein(s), the surface modified nanoparticles, and the rubber nano-domains.

Micrometer-sized core shell rubber toughening agents have been used in curable resin systems. The present inventors have discovered that, when used in combination with surface-modified nanoparticles, rubber nano-domains provide unexpectedly superior results.

Generally, the average size of the rubber nano-domains is less than 500 nm, e.g., less than 300 nm, less than 200 nm, less than 100 nm, or even less than 50 nm. In some embodiments, the nano-domains comprise core shell rubber particles having an average particle size of less than 500 nm, e.g., less than 300 nm, less than 200 nm, less than 100 nm, or even less than 50 nm. In some embodiments, the rubber nano-domains comprise self-assembled block copolymers.

In some embodiments, the curable resin systems of the present disclosure contain at least 0.5%, in some embodiments, at least 1%, and, in some embodiments, at least 2% by weight of the rubber nano-domains based on the total weight of the curable rein(s), the surface modified nanoparticles, and the rubber nano-domains. In some embodiments, the curable resin systems of the present disclosure contain no greater than 10%, in some embodiments, no greater than 7%, and, in some embodiments, no greater than 5% by weight of the rubber nano-domains based on the total weight of the curable rein(s), the surface modified nanoparticles, and the rubber nano-domains.

An exemplary curable resin system according to some embodiments of the present disclosure is illustrated in **FIG. 1****.** Curable resin system **10** comprises curable resin **12.** Curable resin system **10** also comprises surface-modified nanoparticles **14** and rubber nano-domains **16** dispersed within curable resin **12.**

### Examples.

Samples of curable resin compositions were made and cured. All percentages are by weight unless otherwise indicated. The cured compositions were characterized via the following techniques to establish coefficient of thermal expansion (CTE), glass transitions temperature (Tg), fracture resistance (K_{IC}), and dynamic shear modulus (G').

The CTE of the cured resins were measured using a TMA Q400 (V 7.0 Build 80) thermomechanical analyzer (obtained from TA Instruments), with a standard probe and a force of 0.20 Newtons (N). A 1.5 millimeter (mm) (1/16 inch) thick sample was heated at 10 °C per minute (°C/min) from -50 °C to 250 °C. Holding the force constant, the sample was then cooled back to -50 °C at 5 °C/min, and reheated to 250 °C at 10 °C/min. The Tg was determined either by TMA as the temperature at the onset of the first transition in the heat flow curve, or through the use of TA Instruments Q100 DSC as the temperature at the half-height.

The CTE below the Tg of the resin was taken to be a curve fit of the Dimension Change - Temperature curve between -25 °C and 25 °C. The CTE above the glass transition temperature of the resin was taken to be a curve fit of the Dimension Change-Temperature curve between 125 °C and 175 °C.

The dynamic shear modulus (G') of a cured resin sample was measured in torsion rectangular mode on an ARES rheometer (obtained from Rheometrics Scientific, Inc.). Samples of nominal dimensions 35 mm by 12.5 mm by 1.5 mm were heated from 25 °C to 200 °C and a 0.05% strain was applied. AutoStrain Adjustment was employed to keep the torque between 5 grams (g) and 100 g.

The plane-strain fracture toughness (K_{IC}) of a cured resin sample was measured according to ASTM D5045-99, with the exception that only four specimens per sample were measured.

### Preparation of surface-modified nanoparticles.

Surface-modified nanoparticles ("ENP-1") were prepared by treating 1750 grams of an aqueous sol of silica nanoparticles (Nalco 2327, ca. 20 nanometer (nm) diameter) with 76.4 grams of trimethoxyphenyl silane in the presence of 2-methoxyethanol at 95 °C over 48 hours. Using thermogravimetric analysis (TGA), the resulting sol was found to contain 27.5 weight % (wt.%) silica. The ENP-1 surface-modified silica nanoparticles were placed in resin by adding 2190 grams of this sol to 733 grams of a bisphenol F epoxy resin (PY 306 from Ciba Geigy). This mixture was vacuum distilled first at 100 °C and then at 175 °C to remove volatiles. The resulting mixture contained 45 wt.% silica in epoxy resin.

Surface-modified nanoparticles ("ENP-2") were prepared by treating 1300 grams of Nalco 2327 silica sol with 52.9 grams of trimethoxyphenyl silane in the presence of 1-methoxy-2-propanol at 95 °C over 38 hours. Solvent/water was then distilled off leaving a 30 wt.% silica solution. The ENP-2 surface-modified silica nanoparticles were placed in resin by adding 266.7 grams of this sol to 120 grams of PY 306 epoxy resin. This mixture was vacuum distilling at 100 °C and then at 175 °C to remove volatiles. The resulting mixture contained 40 wt.% silica in epoxy resin.

A mixture of both surface-modified nanoparticles and core shell rubber in epoxy resin was prepared by combining 154 grams ENP-2 nanoparticles in epoxy resin (prepared as described above) with 13.12 grams of water-washed, micron-sized core shell rubber particles (PARALOID EXL-2691 available from Rohm and Haas). This combination was heated while stirring for one hour until a smooth dispersion resulted. The resulting mixture contained 37 wt.% silica and 7.8 wt.% core shell rubber in epoxy resin.

Comparative Example CE1. A curable resin composition was prepared by combining 650 g of PY 306 epoxy resin with 592 g of a fluorene amine curative ("CAF"), prepared according to Example 4 of U.S. Patent No. 4,684,678. The composition was stirred at 65 °C under vacuum until a smooth dispersion resulted (about 30 minutes). Cured samples were prepared by heating the curable composition in a mold for four hours at 177 °C. The cured samples were clear.

Comparative Example CE2. A curable resin composition was prepared by first adding 90 grams of 2.3 micrometer silica filter glass spheres (available from Potters Industries, Lot No. 10002E) to 110 grams of PY 306 epoxy resin and stirring at room temperature under vacuum for 15 minutes. Next, 100 grams of this mixture was added to 50.3 grams of CAF curative, and mixed at 65 °C under vacuum for 20 minutes. The resulting curable resin composition contained 36 wt.% silica. Cured samples were prepared by heating the curable composition in molds for four hours at 177 °C. The cured samples were opaque with a grey-brown appearance.

Comparative Example CE3. A curable resin composition was prepared by adding 601 grams of CAF curative to 1200 grams of the ENP-1 in epoxy mixture. The composition was stirred at 65 °C under vacuum until a smooth dispersion resulted (about 30 minutes). The resulting mixture contained 30 wt.% silica. Cured samples were prepared by heating the curable composition in molds at 177 °C for four hours. The cured samples were clear with a brownish hue.

Comparative Example CE4. A curable resin composition was prepared by stirring 1031 grams of CAF curative with 1050 grams of PY 306 epoxy resin at 60 °C under vacuum until smooth. Cured samples were prepared by heating the curable composition in molds for four hours at 177 °C. The cured samples were clear.

Comparative Example CE5. A curable resin composition was prepared by first combining 7.99 grams of water washed PARALOID EXL-2691 core shell rubber particles with 75 grams of PY 306 epoxy resin and stirring at 100 °C until a smooth dispersion resulted (about one hour). Next, 76.9 grams of CAF curative was added and this mixture was stirred at 65 °C under vacuum for 30 minutes. The resulting curable resin composition contained 5 wt.% core shell rubber. Cured samples were prepared by heating the curable composition in molds for four hours at 177 °C. The cured samples were opaque with a yellowish hue.

Comparative Example CE6. A curable resin composition was prepared by combining 69.2 grams of CAF curative and 110 grams of a PY 306 epoxy resin system containing 38.5 wt.% silica nanoparticles (NALCO 2327) that had been surface treated with phenylsilane. The mixture was stirred at 65 °C under vacuum for 30 minutes. The resulting curable resin composition contained 23.5 wt.% silica. Cured samples were prepared by heating the curable composition in molds for four hours at 177 °C. The cured samples were clear with a yellow hue.

Comparative Example CE7. A curable resin composition was prepared by combining 80.4 grams of CAF curative with 142.3 grams of the epoxy resin containing both ENP-2 surface-modified silica nanoparticles and PARALOID EXL-2691 core shell rubber particles and stirring at 65 °C under vacuum for 20 minutes. The resulting curable resin composition contained 23.6 wt.% silica and 5 wt.% core shell rubber. Cured samples were prepared by heating the curable composition in molds for four hours at 177 °C. The cured samples were opaque.

Each of the cured samples were measured to determine fracture toughness (K_{IC}), shear modulus (G'), and glass transition temperature (Tg). The results are shown in Tables 1 and 2. As shown in Table 1, the smaller nano-sized silica particles provided greater enhancement of fracture toughness than the larger, micron-sized silica particles.

**Table 1: Properties of Comparative Examples CE1 - CE3.**

| Example | 30 wt.% silica | K_{IC} [MPa(m)^{1/2}] | G'[GPa] | Tg [°C] |
|---|---|---|---|---|
| CE1 | 0 | 0.75 | 1.60 | 166 |
| CE2 | 2.3 micrometers | 1.04 | 2.45 | 175 |
| CE3 | 20 nanometers | 1.41 | 2.34 | 166 |

As shown in Table 2, the addition of micron-sized core shell rubber to epoxy resin improved the fracture toughness, but reduced the shear modulus. The addition of surface-modified nanoparticles improved both the fracture toughness and the shear modulus; however, the improvement in fracture toughness was less than that provided by the addition of the micron-sized core shell rubber alone. Although the addition of both the micron-sized core shell rubber and the surface modified nanoparticles improved the fracture toughness and the shear modulus, the improvement in fracture toughness was less than that obtained with core shell rubber alone, and the improvement in shear modulus was less than that obtained with surface-modified silica nanoparticles alone.

**Table 2: Properties of Comparative Examples CE4 - CE7.**

| Example | 20 nm Silica | Rubber | K_{IC} [MPa(m)^{1/2}] | G' [GPa] | Tg [°C] |
|---|---|---|---|---|---|
| CE4 | 0 | 0 | 0.9 | 1.70 | 161 |
| CE5 | 0 | 5% | 1.8 | 1.51 | 162 |
| CE6 | 23.5% | 0 | 1.4 | 2.27 | 162 |
| CE7 | 23.5% | 5% | 1.7 | 1.91 | 167 |

The following materials were used to prepare additional samples to further investigate the interaction of surface-modified nanoparticles and rubber nano-domains in a curable resin system.

**Table 3A: Summary of raw materials.**

| Material | Description | Source |
|---|---|---|
| EPON 825 | bisphenol A epichlorohydrin epoxy resin | Hexion Spec. Chem. |
| EPON 828 | difunctional bisphenol A/epichlorohydrin derived liquid epoxy resin | Hexion Spec. Chem. |
| EPON 862 | diglycidal ether of bisphenol F liquid epoxy resin | Hexion Spec. Chem. |
| NALCO 2329 | silica nanoparticles (77-110 nm) | Nalco Chemical Company |
| TX13112 | silica nanoparticles (142-217 nm) | Nalco Chemical Company |
| PARALOID EXA 2600 | micron-sized core shell rubber | Rohm & Haas, Lot 1725749 |
| MX 120 | 25% w/w nano-sized core-shell rubber pre-dispersed in bisphenol A epoxy resin | Kaneka Corp. |
| NANOSTRENGTH E40 | triblock copolymer of polystyrene, 1,4-polybutadiene and syndiotactic poly (methyl methacrylate) | Arkema Inc. |
| HHMPA | 4-methylcyclohexane-1,2-dicarboxylic anhydride | TCI |
| CUREZOL 2E4MZ | 1-(2-cyanoethyl)-2-ethyl-4-methylimidazole | Shikoku Chem. Corp. |
| ETH-100 | A mix of 3,5-diethyltoluene-2,4-diamine and 3,5-diethyltoluene-2,6-diamine | ETHACURE-100 from Albemarle Corp. |
| 80LC | A mix of 3,5-diethyltoluene-2,4-diamine and 3,5-diethyltoluene-2,6-diamine | DETDA 80LC from Lonza Corp. |
| ARALDITE MY 0510 | multifunctional epoxy resin | Hexcel |
| BSPDA | 1,3 bissalicylidene propane diamine | per U.S. Appl. No. 20030111519 |
| DPI | Diphenyl imidazole | Aldrich |
| Thiol epoxy | epoxy functional thiol ether | per Example 1 of U.S. Patent 6,800,371 |

Premixes of micron-sized core shell rubber particles in an epoxy resin were prepared as follows. PARALOID EXA 2600 core shell rubber particles were combined with EPON 825 epoxy resin. Stirring and a vacuum were first applied, followed by heating using an oil bath set between 85-90 °C. The mixture was stirred, heated, and degassed until smooth (no graininess apparent). This took roughly 45-60 minutes. The compositions of these premixes are summarized in Table 3B.

**Table 3B: Micron-sized core shell rubber/epoxy resin premixes.**

| Premix | EPON 825 | PARALOID EXA 2600 | Wt. % Core shell |
|---|---|---|---|
| CS-A | 80 g | 20 g | 20% |
| CS-B | 70 g | 30 g | 30% |
| CS-C | 72 g | 28 g | 28% |

TB-A. NANOSTRENGTH E40, a triblock copolymer of polystyrene, 1,4-polybutadiene and syndiotactic poly (methyl methacrylate)) available from Arkema, Inc. When combined with an appropriate resin, e.g., epoxy resin, the triblock copolymer forms rubber nano-domains.

TB-B. A premix of triblock copolymer in epoxy resin was prepared as follows. 20 g batches of TB-B were prepared by combining NANOSTRENGTH E40 with EPON 828 and processing the mixture in a mini-extruder at 120 °C. The resulting composition contained 40% by weight NANOSTRENGTH E40 in epoxy resin.

Various batches of surface-modified silica nanoparticles dispersed in curable resin were prepared as follows. Unless otherwise indicated, for each sample, final volatile stripping was performed at 145-150 °C for 30-60 minutes. The weight percent silica in the formulations was determined by thermogravimetric analysis (TGA).

NP-A. 1000 grams of NALCO 2329 silica (Lot BP6M0358A, 40 wt.% silica solids) were reacted with 13.2 grams of trimethoxyphenylsilane and 1300 grams of 1-methoxy-2-propanol at 95 °C for 20-22 hours. 2450 grams of the resulting 16.6 wt.% silica solution was mixed with 497 grams of EPON 825 epoxy resin and the mixture was stripped to remove volatiles. The resulting silica/epoxy formulation contained 44 wt.% silica.

NP-B. 1600 grams of NALCO 2329 silica (Lot BP6M0358A, 40 wt.% silica solids) were reacted with 17.9 grams of trimethoxyphenylsilane and 2300 grams of 1-methoxy-2-propanol at 95 °C for 20-22 hours. The resulting solution was air dried at room temperature to a powder then dispersed into acetone using a SILVERSON high shear mixer. 2386 grams of the resulting acetone solution (18 wt.% solids) was mixed with 445 grams of EPON 825 epoxy resin and stripped to remove volatiles. The resulting silica/epoxy formulation contained 52.2 wt.% silica.

NP-C. 1726 grams of NALCO TX13112 silica (Lot XC5H0836A1, 35 wt.% silica solids) was reacted with 10.7 grams of trimethoxyphenylsilane and 2100 grams of 1-methoxy-2-propanol at 95 °C for 20-22 hours. 2820 grams of the resulting 16.3 wt.% silica solution were mixed with 400 grams of EPON 825 and stripped to remove volatiles. The resulting silica/epoxy composition contained 54 wt.% silica.

NP-D. 1807 grams of NALCO TX13112 silica (mix of lots XC5H0836A1 and XC7F0524AO, 32.3 wt.% silica solids) were reacted with 10.4 grams of trimethoxyphenylsilane and 2250 grams of 1-methoxy-2-propanol at 95 °C for 20-22 hours. Distillation was used to concentrate the resulting solution to 18 wt.% solids. 2970 grams of the solution was added to 446 grams of EPON 825 and stripped to remove volatiles. The resulting silica/epoxy composition contained 53 wt.% silica.

NP-E. 1807 grams of NALCO TX13112 silica (mix of lots XC5H0836A1 and XC7F0524AO, 32.3 wt.% silica solids) were reacted with 10.4 grams of trimethoxyphenylsilane and 2250 grams of 1-methoxy-2-propanol at 95 °C for 20-22 hours. Distillation was used to concentrate the resulting solution to 20 wt.% solids. 2538 grams of this solution were added to 440 grams of EPON 825 and stripped to remove volatiles. The resulting silica/epoxy composition contained 53 wt.% silica.

NP-F. 1500 grams of NALCO TX13112 silica (XC7F0524AO, 29.7 wt.% silica solids) were reacted with 7.95 grams of trimethoxyphenylsilane and 2500 grams of 1-methoxy-2-propanol at 95 °C for 20-22 hours. Distillation was used to concentrate the resulting solution to around 20 wt.% solids. 475 grams of this solution was added to 75 grams of EPON 825 and stripped to remove volatiles. The resulting silica/epoxy composition contained 56 wt.% silica.

NP-G. 1807 grams of NALCO TX13112 silica (mix of lots XC5H0836A1 and XC7F0524AO, 32.3 wt.% silica solids) were reacted with 10.4 grams of trimethoxyphenylsilane and 2250 grams of 1-methoxy-2-propanol at 95 °C for 20-22 hours. Distillation was used to concentrate the resulting solution to 23.5 wt.% solids. 2400 grams of this solution were added to 475 grams of EPON 825 and stripped to remove volatiles. The resulting silica/epoxy composition contained 52 wt.% silica. Additional NALCO TX13112 silica sol was added and again stripped to remove volatiles. The final silica/epoxy composition contained 55 wt.% silica.

NP-H. 1500 grams of NALCO TX13112 silica (Lot XC7F0524AO, 27 wt.% silica solids) was reacted with 7.2 grams of trimethoxyphenylsilane and 2200 grams of 1-methoxy-2-propanol at 95 °C for 20-22 hours. Distillation was used to concentrate the resulting solution to 30.9 wt.% solids. About 310 grams of this solution was added to 63 grams of EPON 825 and stripped to remove volatiles. The resulting silica/epoxy composition contained 58 wt.% silica.

NP-I. 919 grams of NALCO 2329 silica (Lot BP6M0358A, 34 wt.% silica solids) were reacted with 10.1 grams of trimethoxyphenylsilane and 1500 grams of 1-methoxy-2-propanol at 95 °C for 20-22 hours. 1800 grams of the resulting 11.9 wt.% silica solution were mixed with 110 grams of EPON 825 and stripped to remove volatiles. The resulting silica/epoxy composition contained 62.5 wt.% silica.

NP-J. 750 grams of NALCO 2329 silica (Lot BP6M0358A, 41 wt.% silica solids) was reacted with 9.8 grams of trimethoxyphenylsilane and 1200 grams of 1-methoxy-2-propanol at 95 °C for 20-22 hours. Distillation was used to concentrate the resulting solution to 31 wt.% solids. 405 grams of this 31 wt.% silica solution was placed in 78 grams of EPON 825 and stripped to remove volatiles. The resulting silica/epoxy composition contained 60 wt.% silica.

NP-K. 905 grams of NALCO 2329 silica (Lot XC3A265A01, 40 wt.% silica solids) was reacted with 6.5 grams of trimethoxyphenylsilane and 1800 grams of 1-methoxy-2-propanol at 95 °C for 20-22 hours. This solution was air dried at room temperature to a powder then dispersed into acetone using a SILVERSON high shear mixer. 1470 grams of the acetone solution (19.5 wt.% solids) was placed in 270 grams of EPON 828 and stripped to remove volatiles. The final strip was done at 120 °C for 20 minutes. The resulting silica/epoxy composition contained 52.4 wt.% silica.

NP-L. 1600 grams of TX13112 silica (Lot XC5H0836A2, 38 wt.% silica solids) was reacted with 10.9 grams of trimethoxyphenylsilane and 2100 grams of 1-methoxy-2-propanol at 95 °C for 20-22 hours. This solution was then air dried at room temperature to form a powder. This powder was then dispersed into acetone using a SILVERSON high shear mixer. 441 grams of the acetone solution (22.7 wt.% solids) was placed in 150 grams of HHMPA and stripped to remove volatiles. The final strip was done at 100°C for 20 minutes. The resulting silica/HHMPA composition contained 40.1 wt.% silica.

NP-M. 1142 grams of NALCO 2329 (Lot XC3A26A01, 50 wt.% silica solids) was reacted with 10.2 grams of trimethoxyphenylsilane and 1700 grams of 1-methoxy-2-propanol at 95 °C for 20-22 hours. This solution was then air dried at room temperature to a powder. The powder was then dispersed into acetone using a SILVERSON high shear mixer. 168 grams of the acetone solution (21.6 wt.% solids) was placed in 50 grams of HHMPA and stripped to remove volatiles. The final strip was done at 100°C for 15 minutes. The resulting silica/HHMPA composition contained 40.2 wt.% silica.

NP- N. 750 grams of NALCO 2329 silica (Lot BP6M0358A0, 40.5 wt.% silica solids) was reacted with 9.64 grams of trimethoxyphenylsilane and 1300 grams of 1-methoxy-2-propanol at 95 °C for 20-22 hours. The solution was heated and solvent/water was distilled off to give a final 30.5 wt.% solids. 465 grams of this solution was placed in 120 grams of EPON 825 and stripped to remove volatiles. The resulting silica/epoxy composition contained 51.3 wt.% silica.

In each of the following data sets, the components were combined in a flask and, while stirring at room temperature, a vacuum was applied for 20-45 minutes. A FLACKTEK 150FVZ speed mixer was used to finish the degassing/mixing step. The resulting formulation was poured into preheated (75 °C) molds and cured first at 75 °C for 3-4 hours, then at 120-125 °C for 2 hours, and finally at 150-160 °C for 2 hours.

The term "Example" is used to designate exemplary, non-limiting examples of compositions of the present disclosure comprising both surface-modified nanoparticles and rubber nano-domains. The term "Reference Sample" is used to designate samples that fail to include at least one of surface-modified nanoparticles or rubber domains. The term "Comparative Example" refers to samples that contain both surface-modified nanoparticles and rubber domains; however, the rubber domains are not nano-domains. The composition data included in Table "A" of each data set report the amount in grams of each material added. However, the various lots of nanoparticles comprise surface-modified nanoparticles dispersed in either a resin or a curative. The resulting weight percent of nanoparticles in the final composition, accounting for both the free resin added as well as any additional resin included as part of the nanoparticle/resin compositions are reported in Table "B" of each data set.

Data Set A: Combining surface-modified silica nanoparticles and core shell rubber nano-domains in an anhydride-cured epoxy resin. Sample compositions are summarized in Table 4A. The physical properties of the cured samples are summarized in Table 4B.

**Table 4A: Compositions of the samples of Data Set A.**

| Sample | EPON 828 | NP-K | NP-L | MX-120 | HHMPA | CUREZOL 2E4MZ |
|---|---|---|---|---|---|---|
| Ref. A1 | 85.7 g | ---- | ---- | ----- | 64.4 g | 4.6 g |
| Ref. A2 | 17.3 g | 102 g | 81.8 g | ----- | ---- | 3.6 g |
| Ref. A3 | 84 g | ----- | ---- | 19.4 g | 76 g | 5.0 g |
| Ex. 1 | ---- | 97.5 | 81.8 g | 22 g | ---- | 3.8 g |

**Table 4B: Properties of Example 1 relative to Reference Samples A1 - A3.**

| Sample | TX13112 Nanoparticles | Core shell | K_{IC} [MPa(m)^{1/2}] | Tg [°C] |
|---|---|---|---|---|
| Ref. A1 | 0 | 0 | 0.52 | 144 |
| Ref. A2 | 40% | 0 | 0.89 | 141 |
| Ref. A3 | 0 | 2.7% | 0.83 | 150 |
| Ex. 1 | 40% | 2.7% | 1.83 | 136 |

Data Set B: Combining 30 wt.% surface-modified silica nanoparticles and core shell rubber nano-domains in a cured epoxy resin. Sample compositions are summarized in Table 5A. The physical properties of the cured samples are summarized in Table 5B.

**Table 5A: Compositions of the samples of Data Set B.**

| Sample | EPON 825 | NP-C | NP-D | MX-120 | ETH-100 |
|---|---|---|---|---|---|
| Ref. B1 | 110 g | ---- | ---- | ---- | 28.5 g |
| Ref. B2 | 58 g | 112 g | ---- | ---- | 29 g |
| Ref. B3 | 138 g | ---- | ---- | 22 g | 38 g |
| Ex. 2 | 37 g | ---- | 113.2 g | 22 g | 27.6 g |

**Table 5B: Properties of Example 2 relative to Reference Samples B1 - B3.**

| Sample | TX13112 Nanoparticles | Core shell | K_{IC} [MPa(m)^{1/2}] | Tg [°C] |
|---|---|---|---|---|
| Ref. B1 | 0 | 0 | 0.58 | 161 |
| Ref. B2 | 30% | 0 | 0.87 | 171 |
| Ref. B3 | 0 | 2.7% | 0.72 | 174 |
| Ex. 2 | 30% | 2.7% | 1.05 | 169 |

Data Set C: Combining 40 wt.% surface-modified silica nanoparticles and various levels of core shell rubber nano-domains in a cured epoxy resin. Sample compositions are summarized in Table 6A. The physical properties of the cured samples are summarized in Table 6B.

**Table 6A: Compositions of the samples of Data Set C.**

| | | Nanoparticles | | | Nano-rubber MX-120 |
|---|---|---|---|---|---|
| Sample | EPON 825 | Lot | Amount | ETH-100 | |
| Ref. C1 | 29.2 g | NP-F | 128.6 g | 22.2 g | ---- |
| Ex. 3 | 12 g | NP-G | 154 g | 24 g | 10 g |
| Ex. 4 | 3 g | NP-E | 151 g | 23.4 g | 22 g |
| Ref. C2 | 120 g | ---- | ---- | 38 g | 40 g |
| Ex. 5 | ---- | NP-H | 138 g | 22.8 g | 40 g |

**Table 6B: Properties of Examples 3 and 4 relative to reference samples.**

| Sample | TX13112 Nanoparticles | Core shell | K_{IC} [MPa(m)^{1/2}] | G' [GPa] | Tg [°C] |
|---|---|---|---|---|---|
| Ref. B1 | 0 | 0 | 0.58 | 1.2 | 161 |
| Ref. C1 | 40% | 0 | 0.88 | 2.0 | 164 |
| Ex. 3 | 40% | 1% | 1.07 | 2.1 | 165 |
| Ref. B3 | 0 | 2.7% | 0.72 | 1.1 | 174 |
| Ex. 4 | 40% | 2.7% | 1.32 | 2.2 | 161 |
| Ref. C2 | 0 | 5% | 0.84 | 1.1 | 174 |
| Ex. 5 | 40% | 5% | 1.18 | 2.1 | 161 |

Data Set D: Combining surface-modified silica nanoparticles and core shell rubber nano-domains in a cured epoxy resin. Sample compositions are summarized in Table 7A. The physical properties of the cured samples are summarized in Table 7B.

**Table 7A: Compositions of the samples of Data Set D.**

| | | Nanoparticles | | | |
|---|---|---|---|---|---|
| Sample | EPON 825 | Lot | Amount | ETH-100 | MX-120 |
| Ref. D1 | 47 g | NP-I | 129 g | 24.6 g | ---- |
| Ex. 6 | 4 g | NP-J | 133 g | 22.6 g | 40 g |

**Table 7B Properties of Examples 6 relative to reference samples.**

| Sample | NALCO 2329 Nanoparticles | Core shell | K_{IC} [MPa(m)^{1/2}] | G' [GPa] | Tg [°C] |
|---|---|---|---|---|---|
| Ref. B1 | 0 | 0 | 0.58 | 1.2 | 161 |
| Ref. D1 | 40% | 0 | 0.81 | 2.1 | 170 |
| Ref. C2 | 0 | 5% | 0.84 | 1.1 | 174 |
| Ex. 6 | 40% | 5% | 1.06 | 2.1 | 164 |

Data Set E: Combining surface-modified silica nanoparticles and core shell rubber nano-domains in a cured epoxy resin. Sample compositions are summarized in Table 8A. The physical properties of the cured samples are summarized in Table 8B.

**Table 8A: Compositions of the samples of Data Set E.**

| | Resin | | Nanoparticles | | DETDA 80LC | |
|---|---|---|---|---|---|---|
| Sample | Type | Amount | Lot | Amount | | MX-120 |
| Ref. E1 | EPON 828 | 140 g | ---- | ---- | 51 g | ---- |
| Ref. E2 | EPON 825 | 21 g | NP-A | 140 g | 39.2 g | ---- |
| Ref. E3 | EPON 825 | 124 g | ---- | ---- | 54.5 g | 21.6 g |
| Ex. 7 | EPON 825 | 26 g | NP-B | 115 g | 37.7 g | 21.6 g |

**Table 8B: Properties of Example 7 relative to Reference Samples E1 - E3.**

| Sample | NALCO 2329 Nanoparticles | Core Shell | K_{IC} [MPa(m)^{1/2}] | Tg [°C] |
|---|---|---|---|---|
| Ref. E1 | 0 | 0 | 0.57 | 130 |
| Ref. E2 | 30% | 0 | 1.43 | 122 |
| Ref. E3 | 0 | 2.7% | 1.61 | 125 |
| Ex. 7 | 30% | 2.7% | 1.90 | 122 |

Data Set F: Combining surface-modified silica nanoparticles and self-assembled triblock copolymer rubber nano-domains in a cured epoxy resin. Sample compositions are summarized in Table 9A. The physical properties of the cured samples are summarized in Table 9B.

**Table 9A: Compositions of the samples of Data Set F.**

| | EPON 828 | Nanoparticles | | Curative | | Triblock Rubber | |
|---|---|---|---|---|---|---|---|
| Sample | | Lot | Amount | Type | Amt. | Type | Amt. |
| Ref. F1 | 11.7 g | NP-K | 133 g | ETH-100 | 18.6 g | | ---- |
| Ref. F2 | 152 g | ---- | ---- | DETDA 80LC | 36.8 g | TB-A | 10.2 g |
| Ex. 8 | ---- | NP-K | 133 g | ETH-100 | 18.6 g | TB-B | 19.5 g |

**Table 9B: Properties of Example 8 relative to reference samples.**

| Sample | NALCO 2329 Nanoparticles | self-assembled triblock copolymer | K_{IC} [MPa(m)^{1/2}] | Tg [°C] |
|---|---|---|---|---|
| Ref. B1 | 0 | 0 | 0.58 | 161 |
| Ref. F1 | 40% | 0 | 0.90 | 165 |
| Ref. F2 | 0 | 5% | 0.73 | 163 |
| Ex. 8 | 39% | 5% | 1.33 | 174 |

Data Set G: Comparing the impact of rubber nano-domains relative to rubber micro-domains when combined with surface-modified nanoparticles in a variety of curable resin systems. Sample compositions are summarized in Table 10A. The physical properties of the cured samples are summarized in Tables 10B - 10E.

**Table 10A: Compositions of the samples of Data Set G.**

| | Resin | | Core Shell | | Nanoparticles | | Curative | |
|---|---|---|---|---|---|---|---|---|
| Sample | EPON | Amt. | Lot | Amt. | Lot | Amt. | Type | Amt. |
| Ref. G1 | 828 | 87.4 g | CS-A | 27 g | ---- | ---- | HHMPA | 85.6 g(c) |
| CE-8 | 825 | ---- (a) | CS-A | 27 g | NP-M | 81.6 g | HHMPA | (b), (d) |
| | | | | | NP-E | 90 g | | |
| Ref. G2 | 825 | 118.5 g | CS-A | 27 g | ---- | ---- | 80LC (e) | 54.4 g |
| CE-9 | 825 | 20.5 g | CS-A | 27 g | NP-B | 115 | 80LC (e) | 37.7 g |
| Ref. G3 | 825 | 127.5 g | CS-B | 33.3 g | ---- | ---- | ETH-100 | 39 g |
| CE-10 | 825 | 14 g | CS-C | 7.2 g | NP-G | 154 g | ETH-100 | 24.1 g |
| CE-11 | 825 | (a) | CS-C | 20 g | NP-N | 156 g | ETH-100 | 23.4 g |
| CE-12 | 825 | (a) | CS-B | 33 g | NP-C | 146 g | ETH-100 | 23 g |

| | | | | | | | | |
|---|---|---|---|---|---|---|---|---|
| (a) EPON 825 included with the nanoparticle lots, no additional EPON 825 added. (b) HHMPA included with the nanoparticle lot, no additional HHMPA added. (c) Also included 5.8 g of CUREZOL 2E4MZ. (d) Also included 3.4 g of CUREZOL 2E4MZ. (e) DETDA 80LC | | | | | | | | |

**Table 10B: Effect of rubber domain size in an anhydride-cured epoxy resin.**

| Sample | TX13112 Nanoparticles | Rubber domains | K_{IC} [MPa(m)^{1/2}] | Tg [°C] |
|---|---|---|---|---|
| Ref. A3 | 0 | 2.7% nano-sized | 0.83 | 150 |
| Ex. 1 | 40% | 2.7% nano-sized | 1.83 | 136 |
| Ref. G1 | 0 | 2.7% micron-sized | 0.81 | 154 |
| CE-8 | 40% | 2.7% micron-sized | 1.51 | 145 |

**Table 10C: Effect of rubber domain size on a highly cured epoxy resin system**

| Sample | NALCO 2329 Nanoparticles | Rubber domains | K_{IC} [MPa(m)^{1/2}] | Tg [°C] |
|---|---|---|---|---|
| Ref. E3 | 0 | 2.7% nano-sized | 1.61 | 125 |
| Ex. 7 | 30% | 2.7% nano-sized | 1.90 | 122 |
| Ref. G2 | 0 | 2.7% micron-sized | 1.63 | 128 |
| CE-9 | 30% | 2.7% micron-sized | 1.90 | 125 |

**Table 10D: Effect of rubber domain size on a cured epoxy resin system.**

| Sample | TX13112 Nanoparticles | Rubber domains | K_{IC} [MPa(m)^{1/2}] | G' [GPa] | Tg [°C] |
|---|---|---|---|---|---|
| Ref. C2 | 0 | 5% nano-sized | 0.84 | 1.1 | 174 |
| Ref. G3 | 0 | 5% micron-sized | 0.85 | 1.2 | 163 |
| Ex. 3 | 40% | 1% nano-sized | 1.07 | 2.1 | 165 |
| CE-10 | 40% | 1% micron-sized | 1.02 | 2.1 | 169 |
| Ex. 4 | 40% | 2.7% nano-sized | 1.32 | 2.2 | 161 |
| CE-11 | 40% | 2.7% micron-sized | 1.15 | 1.9 | 163 |
| Ex. 5 | 40% | 5% nano-sized | 1.18 | 2.1 | 161 |
| CE-12 | 40% | 5% micron-sized | 1.15 | 1.9 | 167 |

In some applications, e.g., underfill adhesives, materials having a low coefficient of thermal expansion (CTE) may be useful. In addition to the beneficial improvements in both K_{IC} and modulus, the present inventors have also discovered that some resin systems of the present disclosure also provide desirable reductions in CTE when combining rubber nano-domains and surface-modified nanoparticles.

EPON 828 and EPON 862 were melted at 85 °C and blended in a 1:1 w/w ratio to obtain a clear liquid. The thiol epoxy and BSPDA were melted at 85 °C before weighing and adding to the formulation. A stock solution of DPI was prepared by mixing 33 g of DPI, 33 g of EPON 828, and 33 g EPON 862. The mixture was mixed using the DAC speedmixer as described above. The blend was then milled using a 3-roll mill to obtain a white paste with no agglomerated DPI.

Surface-modified nanoparticles were prepared by placing 600 grams of 40.7 wt.% NALCO 2329 aqueous sol (Lot BP4L0019A1) in a flask with a stirrer, a thermowatch, and a condenser. While stirring at room temperature, a premix of 950 grams 1-methoxy-2-propanol and 7.1 grams of trimethoxyphenylsilane were slowly added to the sol. No gellation or agglomeration occurred. The mixture was then heated at 95 °C and held at that temperature for 22 hours. The resulting solution containing surface-modified nanoparticles was poured into a foil pan and air dried at room temperature until a white powder resulted.

Reference Examples HI, H2, and H3 and Example 9 were prepared according to the relative amounts shown in Table 11.

**Table 11: Composition of resin systems (parts by weight)**

| | Example | 1:1 blend EPON 828/862 | MY0510 | Thiol epoxy | BSPDA | MX 120 | Surface-modified Nanoparticles |
|---|---|---|---|---|---|---|---|
| 39A | Ref. H1 | 32 | 19 | 19 | 30 | ---- | ---- |
| 39B | Ref. H2 | 16 | 19 | 19 | 30 | 21.3 | ---- |
| 87A | Ref. H3 | 32 | 19 | 19 | 30 | ---- | 100 |
| 87B | Ex. 9 | 16 | 19 | 19 | 30 | 21.3 | 100 |

Reference Examples H1 and H2 were prepared by weighing the resin components into polypropylene cups and mixing using a DAC speedmixer 600FVZ. The samples were mixed for 1 minute at 2500 rpm. Reference Example H1 corresponds to the base resin system. Reference Example H2 contains rubber nano-domains, but no surface-modified nanoparticles

Sample H3 was prepared as follows. First, 250 grams of the surface-modified nanoparticles were high shear mixed into 780 grams of acetone, allowed to settle, and filtered through 53 micron nylon mesh resulting in 23% silica only solids in acetone. Next, 414 grams of this material were placed in 95.2 grams of the resin system of Reference Example HI, mixed well, stripped on a rotary evaporator, and finally placed in a 35 °C vacuum oven overnight to remove volatiles. The resulting resin system contained 49.4% by weight silica in the resin system of Reference Example H1.

Example 9 was prepared as follows. First, 250 grams of the surface-modified nanoparticles were high shear mixed into 780 grams of acetone, allowed to settle, and filtered through 53 micron nylon mesh, resulting in 23% silica only solids in acetone. Next, 406 grams of this material were placed in 93.4 grams of Reference Example H2, mixed well, stripped on a rotary evaporator, and finally placed in a 35 °C vacuum oven overnight to remove volatiles. The resulting resin system contained 49.5% by weight silica in the resin system of Reference Example H2.

An 80 g sample of the H1 resin system was combined with 0.6 g of the DPI/epoxy blend and mixed using the DAC speedmixer. Similarly, an 80 g sample of the H2 resin system was combined with 0.6 g of the DPI/epoxy blend and mixed using the DAC speedmixer.

An 80 g sample of the H3 resin system was combined with 0.3g of the DPI/epoxy blend and mixed using the DAC speedmixer. Similarly, an 80 g sample of the Example 9 resin system was combined with 0.3g of the DPI/epoxy blend and mixed using the DAC speedmixer.

Each of these samples were degassed in a vacuum oven at around 80 °C until no further bubbling was observed in the formulations. Samples for testing mechanical properties were prepared by pouring the resin between two mold-released glass plates separated by a rubber gasket on three sides and clamped together with small clips. The samples were cured at 120 °C in an oven for an hour and post cured at 150 °C for four hours. All the samples were clear with a brown-amber hue.

Each cured sample was evaluated to determine the coefficient of thermal expansion (CTE), glass transitions temperature (Tg), fracture resistance (K_{IC}), and dynamic shear modulus (G'). The results are summarized in Table 12.

**Table 12: Properties of cured resin samples.**

| Sample | K_{IC} [MPa(m)^{1/2}] | G' [GPa] | Tg [°C] | CTE [ppm/°C] |
|---|---|---|---|---|
| Ref. H1 | 0.74 | 1.4 | 89 | 65 |
| Ref. H2 | 1.65 | 1.2 | 87 | 71 |
| Ref. H3 | 1.42 | 3.6 | 77 | 36 |
| Ex. 9 | 1.63 | 3.3 | 77 | 38 |

Generally, the curable resin systems of the present disclosure may be used in a wide variety of applications including adhesives, coatings (including, e.g., gel coats), underfill compositions, and impregnating resins for composites. Generally, composite articles may be formed by known techniques wherein the curable resin systems of the present disclosure may be combined (e.g., infused into) a fibrous matrix and subsequently cured. Exemplary composite articles include wind blades and sporting goods, e.g., fishing poles, golf club shafts, bicycles, and the like.

Various modifications and alterations of this invention will become apparent to those skilled in the art without departing from the scope and spirit of this invention.

## Claims

1. A curable composition comprising at least one curable resin; surface modified nanoparticles having a primary particle size of 50 to 500 nm as measured by transmission electron microscopy; and rubber nano-domains having an average size of 10 to 500 nm as measured by transmission electron microscopy; wherein the rubber nano-domains comprise core-shell rubber nanoparticles, and wherein the surface modified nanoparticles comprise an organic surface treatment agent attached to a surface of a substantially spherical inorganic core, wherein the inorganic core comprises silica.

2. The curable composition of claim 1, wherein the curable resin comprises an epoxy.

3. The curable composition according to claim 2, further comprising a curing agent selected from the group consisting of a cationic curing agent, an anionic curing agent, an addition curing agent, and combinations thereof.

4. The curable composition of claim 1, wherein the curable resin comprises a free-radically curable resin.

5. The curable composition of claim 4, further comprising a curing agent.

6. The curable composition according to any one of the preceding claims, wherein the at least one organic modifying agent is derived from a material selected from the group consisting of monohydric alcohols, polyols, organosilanes, organotitanates, phenyltrimethoxy silane, benzooxasilepin dimethyl ester, phenethyltrimethoxy silane, and N-phenylaminopropyl trimethoxysilane, or mixtures thereof.

7. The curable composition according to any one of the preceding claims, wherein the surface modified nanoparticles have an average particle size of between 100 and 250 nanometers.

8. The curable composition according to any one of the preceding claims, wherein the core-shell rubber nanoparticles comprise a shell having a glass transition temperature of at least 50 °C and a core having a glass transition temperature of no greater than -20 °C as determined by TMA or DSC.

9. The curable composition according to any one of the preceding claims, wherein the shell is selected from the group consisting of an acrylic polymer, an acrylic copolymer, a styrenic polymer, and a styrenic copolymer.

10. The curable composition according to any one of the preceding claims, wherein the core is selected from the group consisting of an acrylic rubber and a diene rubber.

11. The curable composition according to any one of the preceding claims, wherein the rubber nano-domains comprise self-assembling, block copolymers, optionally wherein the self-assembling, block copolymers comprise triblock copolymers.

12. The curable composition according to any one of the preceding claims, wherein the curable composition comprises 20% to 50% by weight surface modified nanoparticles based on the total weight of the curable resin(s), the surface modified nanoparticles, and the core shell rubber nanoparticles.

13. The curable composition according to any one of the preceding claims, wherein the curable composition comprises 0.5% to 10% by weight rubber nano-domains based on the total weight of the curable resin(s), the surface modified nanoparticles, and the rubber nano-domains.

14. A toughened resin comprising a cured curable composition according to any one of the preceding claims.

15. An article comprising the toughened resin of claim 14.

16. The article of claim 15, wherein the article is selected from the group consisting of an adhesive, a coating, an underfill, and a gel coat.

17. The article of claim 15, wherein the article is a composite article comprising a fiber matrix.

18. The article of claim 17, wherein the article is selected from the group consisting of a wind turbine blade and a sporting good.

## Patentansprüche

1. Härtbare Zusammensetzung, umfassend mindestens ein härtbares Harz; oberflächenmodifizierte Nanoteilchen mit einer primären Teilchengröße von 50 bis 500 nm, wie durch Transmissionselektronenmikroskopie gemessen, und Kautschuknanodomänen mit einer durchschnittlichen Größe von 10 bis 500 nm, wie durch Transmissionselektronenmikroskopie gemessen; wobei die Kautschuknanodomänen Kern-Hülle-Kautschuknanoteilchen umfassen und wobei die oberflächenmodifizierten Nanoteilchen ein organisches Oberflächenbehandlungsmittel umfassen, das an einer Oberfläche eines im Wesentlichen kugelförmigen anorganischen Kerns befestigt ist, wobei der anorganische Kern Siliziumdioxid umfasst.

2. Härtbare Zusammensetzung nach Anspruch 1, wobei das härtbare Harz ein Epoxid umfasst.

3. Härtbare Zusammensetzung nach Anspruch 2, ferner umfassend ein Härtungsmittel, ausgewählt aus der Gruppe, bestehend aus einem kationischen Härtungsmittel, einem anionischen Härtungsmittel, einem Additionshärtungsmittel und Kombinationen davon.

4. Härtbare Zusammensetzung nach Anspruch 1, wobei das härtbare Harz radikalisch härtbares Harz umfasst.

5. Härtbare Zusammensetzung nach Anspruch 4, ferner umfassend ein Härtungsmittel.

6. Härtbare Zusammensetzung nach einem der vorstehenden Ansprüche, wobei das mindestens eine organische Modifizierungsmittel von einem Material abgeleitet ist, das ausgewählt ist aus der Gruppe, bestehend aus einwertigen Alkoholen, Polyolen, Organosilanen, Organotitanaten, Phenyltrimethoxysilan, Benzooxasilepindimethylester, Phenethyltrimethoxysilan und N-Phenylaminopropyltrimethoxysilan oder Mischungen davon.

7. Härtbare Zusammensetzung nach einem der vorstehenden Ansprüche, wobei die oberflächenmodifizierten Nanoteilchen eine durchschnittliche Teilchengröße zwischen 100 und 250 Nanometern aufweisen.

8. Härtbare Zusammensetzung nach einem der vorstehenden Ansprüche, wobei die Kern-Hülle-Kautschuknanoteilchen eine Hülle mit einer Glasübergangstemperatur von mindestens 50 °C und einen Kern mit einer Glasübergangstemperatur von nicht mehr als -20 °C, wie durch TMA oder DSC bestimmt, umfassen.

9. Härtbare Zusammensetzung nach einem der vorstehenden Ansprüche, wobei die Hülle ausgewählt ist aus der Gruppe, bestehend aus einem Acrylpolymer, einem Acrylcopolymer, einem Styrolpolymer und einem Styrolcopolymer.

10. Härtbare Zusammensetzung nach einem der vorstehenden Ansprüche, wobei der Kern ausgewählt ist aus der Gruppe, bestehend aus einem Acrylkautschuk und einem Dienkautschuk.

11. Härtbare Zusammensetzung nach einem der vorstehenden Ansprüche, wobei die Kautschuknanodomänen selbstanordnende Blockcopolymere umfassen, wobei die selbstanordnenden Blockcopolymere gegebenenfalls Triblock-Copolymere umfassen.

12. Härtbare Zusammensetzung nach einem der vorstehenden Ansprüche, wobei die härtbare Zusammensetzung 20 Gew.-% bis 50 Gew.-% oberflächenmodifizierte Nanoteilchen umfasst, bezogen auf das Gesamtgewicht des einen oder der mehreren härtbaren Harze, der oberflächenmodifizierten Nanoteilchen und der Kern-Hülle-Kautschuknanoteilchen.

13. Härtbare Zusammensetzung nach einem der vorstehenden Ansprüche, wobei die härtbare Zusammensetzung 0,5 Gew.-% bis 10 Gew.-% Kautschuknanodomänen umfasst, bezogen auf das Gesamtgewicht des einen oder der mehreren härtbaren Harze, der oberflächenmodifizierten Nanoteilchen und der Kautschuknanodomänen.

14. Zähgemachtes Harz, umfassend eine gehärtete härtbare Zusammensetzung nach einem der vorstehenden Ansprüche.

15. Gegenstand, umfassend das zähgemachte Harz nach Anspruch 14.

16. Gegenstand nach Anspruch 15, wobei der Gegenstand ausgewählt ist aus der Gruppe, bestehend aus einem Klebstoff, einer Beschichtung, einer Unterfüllung und einer Gelbeschichtung.

17. Gegenstand nach Anspruch 15, wobei der Gegenstand ein Verbundsgegenstand ist, der eine Fasermatrix umfasst.

18. Gegenstand nach Anspruch 17, wobei der Gegenstand ausgewählt ist aus der Gruppe, bestehend aus einer Windturbinenschaufel und einem Sportgerät.

## Revendications

1. Composition durcissable comprenant au moins une résine durcissable ; des nanoparticules modifiées en surface ayant une taille de particule primaire de 50 à 500 nm telle que mesurée par microscopie électronique à transmission ; et des nano-domaines de caoutchouc ayant une taille moyenne de 10 à 500 nm telle que mesurée par microscopie électronique à transmission ; dans laquelle les nano-domaines de caoutchouc comprennent des nanoparticules de caoutchouc à noyau-enveloppe, et dans laquelle les nanoparticules modifiées en surface comprennent un agent organique de traitement de surface fixé à une surface d'un noyau inorganique sensiblement sphérique, dans laquelle le noyau inorganique comprend de la silice.

2. Composition durcissable selon la revendication 1, dans laquelle la résine durcissable comprend un époxy.

3. Composition durcissable selon la revendication 2, comprenant en outre un agent de durcissement choisi dans le groupe constitué d'un agent de durcissement cationique, un agent de durcissement anionique, un agent de durcissement par addition, et des combinaisons de ceux-ci.

4. Composition durcissable selon la revendication 1, dans laquelle la résine durcissable comprend une résine durcissable par radicaux libres.

5. Composition durcissable selon la revendication 4, comprenant en outre un agent de durcissement.

6. Composition durcissable selon l'une quelconque des revendications précédentes, dans laquelle ledit au moins un agent modifiant organique est dérivé d'un matériau choisi dans le groupe constitué d'alcools monohydriques, polyols, organosilanes, organotitanates, phényltriméthoxy-silane, ester diméthylique de benzo-oxasilépine, phénéthyltriméthoxy-silane et N-phénylaminopropyl-triméthoxysilane, ou des mélanges de ceux-ci.

7. Composition durcissable selon l'une quelconque des revendications précédentes, dans laquelle les nanoparticules modifiées en surface ont une taille moyenne de particules comprise entre 100 et 250 nanomètres.

8. Composition durcissable selon l'une quelconque des revendications précédentes, dans laquelle les nanoparticules de caoutchouc à noyau-enveloppe comprennent une enveloppe ayant une température de transition vitreuse d'au moins 50 °C et un noyau ayant une température de transition vitreuse n'excédant pas -20 °C telle que déterminée par TMA ou DSC.

9. Composition durcissable selon l'une quelconque des revendications précédentes, dans laquelle l'enveloppe est choisie dans le groupe constitué d'un polymère acrylique, d'un copolymère acrylique, d'un polymère styrénique et d'un copolymère styrénique.

10. Composition durcissable selon l'une quelconque des revendications précédentes, dans laquelle le noyau est choisi dans le groupe constitué d'un caoutchouc acrylique et d'un caoutchouc diénique.

11. Composition durcissable selon l'une quelconque des revendications précédentes, dans laquelle les nano-domaines de caoutchouc comprennent des copolymères séquencés à autoassemblage, éventuellement dans laquelle les copolymères séquencés à autoassemblage comprennent des copolymères tri-séquencés.

12. Composition durcissable selon l'une quelconque des revendications précédentes, dans laquelle la composition durcissable comprend 20 % à 50 % en poids de nanoparticules modifiées en surface sur la base du poids total de la ou des résine(s) durcissable(s), des nanoparticules modifiées en surface et des nanoparticules de caoutchouc à noyau-enveloppe.

13. Composition durcissable selon l'une quelconque des revendications précédentes, dans laquelle la composition durcissable comprend 0,5 % à 10 % en poids de nano-domaines de caoutchouc sur la base du poids total de la ou des résine(s) durcissable(s), des nanoparticules modifiées en surface et des nano-domaines de caoutchouc.

14. Résine renforcée comprenant une composition durcissable durcie selon l'une quelconque des revendications précédentes.

15. Article comprenant la résine renforcée selon la revendication 14.

16. Article selon la revendication 15, dans lequel l'article est choisi dans le groupe constitué d'un adhésif, un revêtement, un sous-remplissage et un enduit gélifié.

17. Article selon la revendication 15, dans lequel l'article est un article composite comprenant une matrice de fibres.

18. Article selon la revendication 17, dans lequel l'article est choisi dans le groupe constitué d'une pale d'éolienne et d'un article de sport.
